# EUROPÄISCHE PATENTANMELDUNG

(11) **EP 4 116 016 A1**
(43) Veröffentlichungstag der Anmeldung: **11.01.2023**
(21) Anmeldenummer: 21184812.2
(22) Anmeldetag: 09.07.2021
(51) Int. Cl.: B22F 10/28, B22F 10/36, B22F 10/366, B22F 10/38, B22F 10/80, B22F 12/90, B33Y 10/00, B33Y 30/00, B33Y 50/00, B33Y 50/02

(54) **VERFAHREN UND VORRICHTUNG ZUM SCHICHTWEISEN HERSTELLEN EINES OBJEKTS**

(71) Anmelder: Siemens Aktiengesellschaft, 80333 München (DE)
(72) Erfinder: Heinrichsdorff, Frank, 14513 Teltow (DE); Kastsian, Darya, 14612 Falkensee (DE); Reznik, Daniel, 13503 Berlin (DE)

(57) **Zusammenfassung**

Zur Vermeidung von lokaler Überhitzung beim selektiven Laserschmelzen werden parallel liegende Belichtungsvektoren in Gruppen von benachbarten Belichtungsvektoren unterteilt und nach dem Verfestigen einer solchen Gruppe eine oder mehrere räumlich folgende Gruppen übersprungen und mit einer entfernten Gruppe fortgesetzt.

## Beschreibung

Die Erfindung betrifft ein Verfahren und eine Vorrichtung zum schichtweisen Herstellen eines Objekts mit einem pulverbasierten 3D-Druckverfahren.

Das Verfahren und die Vorrichtung können bei pulverbasierten 3D Druckverfahren, insbesondere als eine optimierte Verfahrensweise oder Vorrichtung, im Rahmen eines selektiven Laserschmelz-Prozesses (Selective Laser Melting, kurz: SLM) zum Einsatz kommen.

Es hat sich gezeigt, dass bisher favorisierte Verfahrensweisen lokale Überhitzungen erzeugen können. Diese Überhitzungen können größere Metallperlen erzeugen, die den weiteren Beschichtungsvorgang mit Pulver erheblich stören. Die Qualität der realisierten Bauteile wird so deutlich vermindert oder es kann sogar zum Abbruch des Bauprozesses kommen.

Es ist Aufgabe der Erfindung lokale Überhitzungen bei selektiven, pulverbasierten 3D-Druckverfahren, insbesondere Schmelzverfahren zu vermeiden.

Diese Aufgabe wird durch ein Verfahren mit den im Anspruch 1 angegebenen Merkmalen gelöst. Eine weitere Lösung besteht in der Vorrichtung mit den Merkmalen von Anspruch 11.

Bei dem erfindungsgemäßen Verfahren zum schichtweisen Herstellen eines Objekts mit einem pulverbasierten 3D-Druckverfahren durch selektives Verfestigen von Schichten eines Pulvers in einem Pulverbett erfolgt das Verfestigen innerhalb einer Schicht in aufeinanderfolgend verfestigten Bahnen, wobei die Bahnen einer Schicht in einen oder mehrere Bereiche unterteilt werden, wobei die Bahnen eines Bereichs parallel zueinander verlaufen.

Weiterhin werden die Bahnen wenigstens eines Bereichs in Gruppen unterteilt, wobei eine Gruppe entweder eine Bahn oder mehrere einander direkt benachbart liegende Bahnen umfasst.

Ferner wird ein ganzzahliger Sprungindex ermittelt, der mindestens eins beträgt. Die Bahnen einer ersten Gruppe werden verfestigt und danach werden die Bahnen einer zweiten Gruppe verfestigt, wobei räumlich zwischen der ersten Gruppe und der zweiten Gruppe eine Anzahl weiterer Gruppen liegt, die dem Sprungindex entspricht.

Die erfindungsgemäße Vorrichtung ist eingerichtet zum schichtweisen Herstellen eines Objekts mit einem 3D-Druckverfahren durch selektives Verfestigen von Schichten eines Pulvers in einem Pulverbett. Dabei erfolgt das Verfestigen innerhalb einer Schicht in aufeinanderfolgend verfestigten Bahnen erfolgt.

Die Vorrichtung umfasst eine Einrichtung zur Erzeugung eines Energiestrahls und eine Steuerungseinrichtung zur Steuerung der Einrichtung. Die Steuerungseinrichtung ist ausgestaltet, den Energiestrahl entlang von Bahnen auf eine Pulverschicht zu richten und dabei die Bahnen einer Schicht in einen oder mehrere Bereiche zu unterteilen, wobei die Bahnen eines Bereichs parallel zueinander verlaufen. Weiterhin ist die Steuerungseinrichtung ausgestaltet, die Bahnen eines Bereichs in Gruppen zu unterteilen, wobei eine Gruppe entweder eine Bahn oder mehrere einander direkt benachbart liegende Bahnen umfasst.

Sie ist ferner eingerichtet, einen ganzzahligen Sprungindex zu ermitteln, der mindestens eins beträgt, den Energiestrahl so zu steuern, dass die Bahnen einer ersten Gruppe verfestigt werden und danach den Energiestrahl so zu steuern, dass die Bahnen einer zweiten Gruppe verfestigt werden, wobei räumlich zwischen der ersten Gruppe und der zweiten Gruppe eine Anzahl weiterer Gruppen liegt, die dem Sprungindex entspricht.

Die Bahnen werden dabei auch als Belichtungsvektoren bezeichnet. Die Bahnen können dabei alle parallel verlaufen, können aber auch nur bereichsweise parallel verlaufen, wobei eine momentane Pulverschicht in mehrere solche Bereiche unterteilt ist. Laufen alle Bahnen parallel, kann die Pulverschicht als ein solcher Bereich verstanden werden.

Die Bahnen sind bevorzugt so eingerichtet, dass ein Ende einer ersten Bahn an den Anfang der nächstfolgenden Bahn grenzt. Versteht man die Bahnen als Vektoren, dann laufen sie also antiparallel.

Umfassen die Gruppen jeweils genau eine Bahn, dann bildet jede Bahn ihre eigene Gruppe. Umfassen die Gruppen mehr als eine Bahn, dann werden die Gruppen aus solchen Bahnen gebildet, die direkt benachbart zueinander liegen. Diese Bahnen würden bei einer rein geometrischen Abfolge der Bahnen direkt aufeinanderfolgend verfestigt.

Der Sprungindex gibt an, wie viele Gruppen nach der Verfestigung einer Gruppe von Bahnen zu überspringen sind in der geometrischen Abfolge der Gruppen, die sich aus der geometrischen Abfolge der Bahnen ergibt. Der Sprungindex wird dabei stets eingehalten, außer das Ende der geometrischen Abfolge ist erreicht und die nächstfolgende Gruppe existiert nicht.

Vorteilhaft schafft die Erfindung eine Möglichkeit, lokale Überhitzungen zu vermeiden, indem ein wiederholter Wärmeeintrag an nahezu derselben Stelle der Pulverschicht vermieden wird. Das wird dadurch erreicht, dass die rein geometrische Abfolge der Bahnen verlassen wird und so größere zeitliche Abstände zwischen nahe beieinander liegende Punkte der Bahnen treten. Dadurch werden vorteilhaft Überhitzungen vermieden, die beispielsweise an Engstellen des zu schaffenden Bauteils auftreten, da dort die Bahnen nur kurz sind und somit der Energiestrahl in einem räumlich eng begrenzten Gebiet verweilt. Es werden auch solche Überhitzungen vermieden, die an Überhängen auftreten, da dort die Wärmeableitung vermindert ist. Somit kann die Einführung zusätzlicher Stützstrukturen (Supports), die nur der besseren Wärmeableitung dienen, vermieden werden. Generell wird der Wärmeeintrag besser auf die Pulverschicht verteilt als bei einer Abarbeitung der Bahnen entsprechen ihrer geometrischen Anordnung.

Vorteilhafte Ausgestaltungen des erfindungsgemäßen Verfahrens und der erfindungsgemäßen Vorrichtung gehen aus den abhängigen Ansprüchen hervor. Dabei kann die Ausführungsform der unabhängigen Ansprüche mit den Merkmalen eines der Unteransprüche oder vorzugsweise auch mit denen aus mehreren Unteransprüchen kombiniert werden. Demgemäß können noch zusätzlich folgende Merkmale vorgesehen werden:
Bei Erreichen des Endes eines Bereichs kann eine Fortsetzung mit der ersten unbearbeiteten Gruppe stattfinden. Mit dem Ende eines Bereichs ist gemeint, dass die sich ergebende nächste zu bearbeitende Gruppe nicht existiert oder nicht Teil des momentanen Bereichs ist. In diesem Fall wird zu den ersten Bahnen zurückgekehrt und die erste noch zu bearbeitende Gruppe ausgewählt. Dadurch wird vorteilhaft ein möglichst großer zeitlicher Abstand zwischen der Verfestigung nahe beieinander liegender Orte einer Pulverschicht beibehalten.

Der Sprungindex kann aus einer Sprungdistanz ermittelt werden, wobei die Sprungdistanz ein Vielfaches des Abstands zwischen benachbarten Bahnen ist. Mit anderen Worten ist der Sprungindex austauschbar gegen andere Möglichkeiten, die jeweils nächste Gruppe mathematisch auszudrücken. Eine solche andere Möglichkeit ist die Angabe einer Distanz, beispielsweise 1mm. Diese Distanz kann ein ganzzahliges Vielfaches des Abstands zwischen benachbarten Bahnen sein, wodurch die Sprungdistanz zu einer Bahn einer eindeutige nächste Bahn angibt. Sie kann aber auch unabhängig vom Bahnabstand sein. In diesem Fall kann eine nächstfolgende Bahn oder Gruppe so gewählt werden, dass die Sprungdistanz eingehalten oder überschritten sein muss.

Die Sprungdistanz kann durch eine Finite-Elemente-Simulation ermittelt werden. Damit wird ein genaues und zum Bauteil passendes Ergebnis erzielt und somit die bestmögliche Bauteilqualität bei gleichzeitig möglichst geringem zeitlichen Verlust, beispielsweise durch Wartezeiten. Alternativ kann die Sprungdistanz auch empirisch festgelegt werden.

Bevorzugt ist die Sprungdistanz ein ungerades Vielfaches des Abstands zwischen benachbarten Bahnen. Dadurch wird eine optimale Folge von Bahnen erreicht, bei denen aufeinanderfolgend bearbeitete Bahnen trotz des Überspringens von Gruppen gegenläufig sind. Dadurch wird ein zusätzlicher Sprung beim Verfestigen vermieden.

Die Gruppen sind bevorzugt so gewählt, dass alle Gruppen jedes Bereichs dieselbe Anzahl Bahnen aufweisen. Diese Vorgehensweise ist rechnerisch einfach umzusetzen. Dabei kann höchstens eine Rest-Gruppe verbleiben, die weniger als diese Anzahl an Bahnen aufweist. Die Restgruppe tritt auf, wenn die Anzahl an Bahnen kein ganzzahliges Vielfaches der Anzahl an Bahnen pro Gruppe ist. Diese Restgruppe wird abgesehen von der Anzahl an enthaltenen Bahnen genauso behandelt wie die anderen Gruppen.

Die Gruppen können abgesehen von der Rest-Gruppe jeweils genau 2 oder genau 3 Bahnen umfassen. Diese Gruppengrößen stellen einen guten Kompromiss dar. So werden einerseits zu große Gruppen vermieden. In zu großen Gruppen ist der punktuelle Wärmeeintrag möglicherweise zu hoch und Überhitzungen werden nicht mehr so gut vermieden wie mit kleineren Gruppen. Eine Gruppierung mit Gruppenstärke eins dagegen führt viele zusätzliche Sprünge ein und verlängert somit die Druckzeit.

Wenn die Gruppen - abgesehen von einer möglichen Rest-Gruppe - mehrere Bahnen umfassen, dann kann bei wenigstens einer der Gruppen für die zuerst verfestigte Bahn der Gruppe für das Verfestigen eine höhere Leistung für den Energiestrahl verwendet werden als für die weiteren Bahnen der Gruppe. Es wird also beispielsweise eine höhere Laserleistung verwendet.

Damit wird vorteilhaft ein Unterschied im Schmelzprozess zwischen der ersten Bahn einer Gruppe und den nachfolgenden ausgeglichen. Dieser Unterschied entsteht dadurch, dass die erste Bahn einer Gruppe immer ohne bereits belichteten Nachbarn in das Pulver geschrieben wird, alle folgenden Bahnen der Gruppe dagegen immer neben/an einer schon belichteten Bahn geschrieben werden. Damit fallen die Energie-Einkopplung und "Kontraktion" des Pulvers unterschiedlich aus zwischen der jeweiligen ersten Bahn einer Gruppe und deren weiteren Bahnen.

In anderen Ausgestaltungen kann auch für die erste Bahn einer Gruppe eine verringerte Leistung für den Energiestrahl verwendet werden.

Nach dem Verfestigen der Bahnen der ersten Gruppe und vor dem Verfestigen der Bahnen der zweiten Gruppe kann die erste Bahn einer räumlich der ersten Gruppe nächstfolgenden Gruppe verfestigt werden. Beispielsweise kann also nach dem Verfestigen der Bahnen einer geometrisch fünften Gruppe die erste Bahn der geometrisch sechsten Gruppe verfestigt werden, bevor dann zur geometrisch achten Gruppe gewechselt wird. Dadurch wird wenigstens ein Teil der Bahnen doppelt belichtet, speziell an Verbindungsstellen zwischen Gruppen. Durch dieses nochmalige Umschmelzen wird die Oberfläche der Pulverschicht oder des Bauteils geglättet.

Es ist vorteilhaft, wenn eine Abkühlzeit ermittelt wird, die die Zeitspanne angibt, die zwischen der Belichtung benachbart liegender Gruppen vergehen muss, um eine lokale Überhitzung zu vermeiden. Dann kann bei Belichtung einer Gruppe, die direkt benachbart ist zu einer bereits belichteten Gruppe, geprüft werden, ob der zeitliche Abstand der Belichtung beider Gruppen geringer ist als die ermittelte Abkühlzeit. Wenn das der Fall ist, kann eine Wartezeit vor der Belichtung der Gruppe eingefügt werden. Diese wird so bemessen, dass der zeitliche Abstand der Belichtung beider Gruppen wenigstens so groß ist wie die Abkühlzeit. Es wird somit in jedem Fall sichergestellt, dass lokale Überhitzungen vermieden werden, auch wenn der zeitliche Abstand der Belichtung durch die Gruppenbildung noch nicht ganz ausreichend ist.

Die Abkühlzeit kann dabei für jede Gruppe separat ermittelt werden. Dadurch werden die lokalen Gegebenheiten optimal berücksichtigt und keine unnötigen Wartezeiten eingeführt an Stellen, die für lokale Überhitzung unkritisch sind. Zur Vereinfachung kann aber auch eine Abkühlzeit für alle Gruppen gleichermaßen verwendet werden. Dadurch vereinfacht sich die Ermittlung und die Herstellung des Bauteils.

Eine Abkühlzeit kann ebenfalls zwischen den Bahnen eines Bereichs und den Bereich umgebenden Konturbahnen verwendet werden, um auch hier eine ausreichende Abkühlung sicherzustellen.

Im Folgenden wird die Erfindung anhand der in den Figuren dargestellten Ausführungsbeispiele näher beschrieben und erläutert. Es zeigen:
- Figur 1: Belichtungsvektoren einer Schicht in einem Bauteil,
- Figur 2: eine Abfolge für die Belichtung der Belichtungsvek-toren,
- Figur 3: eine Gruppierung der Belichtungsvektoren,
- Figur 4: eine Abfolge der Belichtung der Gruppen der Belich-tungsvektoren.

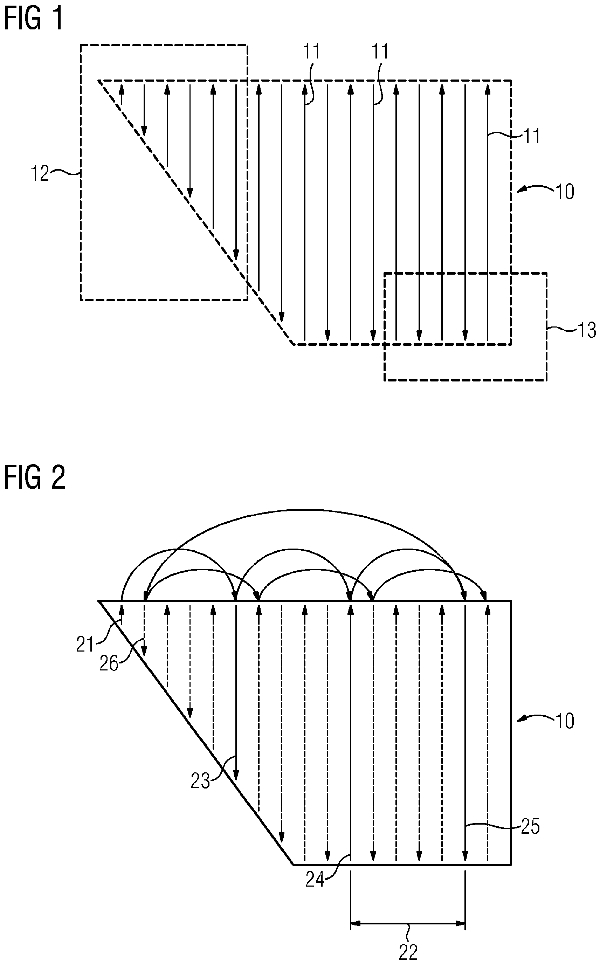

Figur 1 zeigt schematisch Belichtungsvektoren 11 in einem einzelnen Pulverbett 10, das im Rahmen der additiven Herstellung eines Bauteils bereitgestellt wird. Die Belichtungsvektoren 11 sind dabei parallel zueinander angeordnet und werden durch einen Energiestrahl, z.B. einen Laser oder ein Elektronenstrahl bereitgestellt. Die ersten Belichtungsvektoren 11 führen dazu, dass sich nach Belichtung durch den Energiestrahl verfestigte Bahnen aus dem Material bilden, das als Pulverschicht 10 bereitgestellt ist.

Das Bauteil ist dabei so gestaltet, dass es in dem Ausschnitt, der durch die Belichtungsvektoren 11 in Verbindung mit dem Pulverbett 10 hergestellt wird, einen spitz zulaufenden Bereich 12 aufweist. In dem spitz zulaufenden Bereich 12 ist die Zeitspanne, die vergeht, bis der Energiestrahl beim Durchlaufen der Belichtungsvektoren 11 wieder in die Nähe eines soeben bestrichenen Punkts gelangt, gering, da die Belichtungsvektoren 11 kurz sind. Dadurch ist das Potential für eine lokale Überhitzung in dem spitz zulaufenden Bereich 12 hoch.

Das Bauteil weist weiterhin in dem Überhangsbereich 13 einen Überhang auf, also einen Bereich, der nicht direkt unterstützt ist von seiner Bodenplatte aus, sondern von einem seitlich davon liegenden Bauteilbereich gehalten wird. In dem Überhangsbereich 13 sind die Belichtungsvektoren 11 lang genug, um eine lokale Überhitzung analog zum spitz zulaufenden Bereich 12 zu verhindern. Dafür ist aber die lokale Wärmeableitung im Überhangsbereich 13 geringer als in anderen Bereichen des Bauteils mit massiver Materialunterstützung. Dadurch entsteht auch im Überhangsbereich 13 die Gefahr einer lokalen Überhitzung.

Um dem zu begegnen, wird in einem ersten Ausführungsbeispiel für die Erfindung eine veränderte Verfahrensweise bei der Belichtung des Pulverbetts 10 verwendet, die in Figur 2 gezeigt ist.

Figur 2 zeigt wieder das Pulverbett 10 und die Belichtungsvektoren 11. Diese werden jedoch in dieser Ausführungsform nicht in der normalen Abfolge beispielsweise von links nach rechts abgearbeitet. Vielmehr wird für die Belichtungsvektoren 11 eine Sprungdistanz 22 ermittelt. Diese Sprungdistanz 22 gibt einen Abstand an, der zwischen aufeinander folgende belichteten Belichtungsvektoren 11 eingehalten werden muss, um eine lokale Überhitzung zu vermeiden. Die Sprungdistanz ist dabei ein Vielfaches des Abstands zwischen zwei Belichtungsvektoren 11. Die Sprungdistanz 22 kann auch als Sprungindex ausgedrückt werden, der die Anzahl an zu überspringenden Belichtungsvektoren 11 angibt, wenn ein erster Belichtungsvektor 11 belichtet ist und ein nächstfolgender Belichtungsvektor 11 ausgewählt wird.

Diese Sprungdistanz 22 kann beispielsweise mittels einer Finite-Elemente-Methode aus einer Simulation der Belichtung des Pulverbetts 10 berechnet werden. Alternativ kann die Sprungdistanz auch empirisch gewählt werden. In dem vorliegenden Beispiel soll als Sprungindex vier gewählt werden. Es werden also nach der Belichtung eines Belichtungsvektors 11 vier nachfolgende Belichtungsvektoren 11 übersprungen und dann die Belichtung mit dem fünften Belichtungsvektor 11 fortgesetzt.

In dem Beispiel gemäß Figur 2 wird also mit dem ersten Belichtungsvektor 21 begonnen. Auf diesen folgend wird die Belichtung mit einem zweiten Belichtungsvektor 23 fortgesetzt. Dafür werden 4 zwischenliegende Belichtungsvektoren 11 ausgelassen oder in anderen Worten ein räumlicher Abstand eingehalten, der dem fünffachen eines Abstands zwischen zwei Belichtungsvektoren 11 entspricht.

Nach Belichtung gemäß dem zweiten Belichtungsvektor 23 wird in einer vergleichbaren Weise die Belichtung mit einem dritten Belichtungsvektor 24 fortgesetzt, wobei dieser vom zweiten Belichtungsvektor 23 wiederum durch eine Sprungdistanz in Form eines räumlichen Abstands vom fünffachen eines Abstands zwischen zwei Belichtungsvektoren 11 getrennt ist.

Auf den dritten Belichtungsvektor 24 folgt in analoger Weise ein vierter Belichtungsvektor 25. Mit derselben Sprungdistanz ist in der Folge kein weiterer Belichtungsvektor 11 mehr erreichbar. Daher wird die Folge von Belichtungsvektoren 11 vorne fortgesetzt. Da der in der geometrischen Abfolge der Belichtungsvektoren 11 erste Belichtungsvektor 21 bereits verwendet wurde, wird der geometrisch nächstfolgende Belichtungsvektor 11 verwendet. Auf diesen folgend wird in der beschriebenen Weise jeweils ein Belichtungsvektor 11 gewählt, der durch die Sprungdistanz vom vorangegangenen Belichtungsvektor 11 getrennt ist.

Durch die beschriebene Folge von Belichtungsvektoren 11, die nicht der rein geometrischen Abfolge entspricht, wird dafür gesorgt, dass der zeitliche Abstand zwischen den Belichtungen benachbarter Orte im Pulverbett 10 möglichst groß ist und somit werden Überhitzungen vermieden.

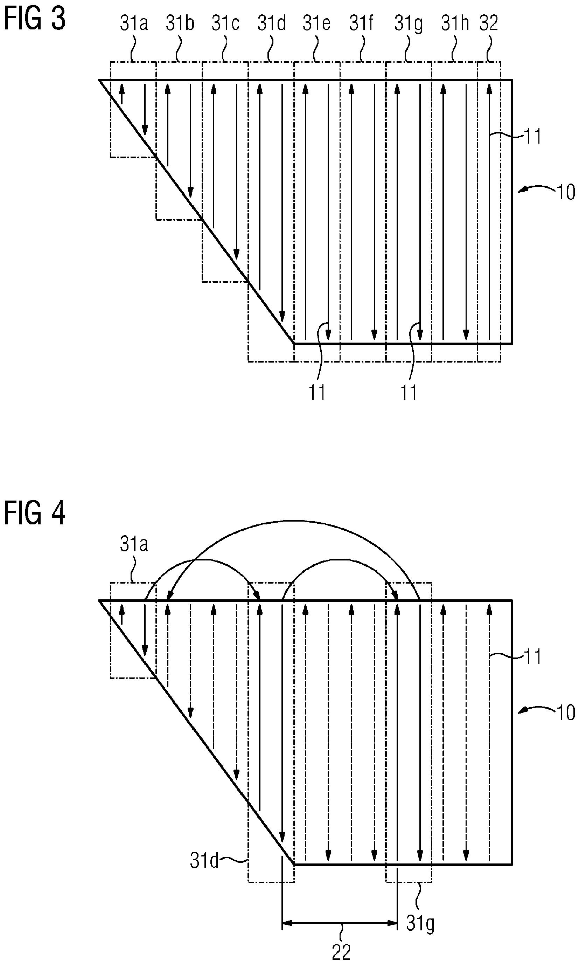

In einer zweiten Ausführungsform für die Erfindung wird eine andere Abfolge von Belichtungsvektoren 11 verwendet. Dazu wird in einem ersten Schritt eine Gruppierung der Belichtungsvektoren 11 durchgeführt. Diese Gruppierung ist in Figur 3 dargestellt, wobei das Bauteil und die Form des Pulverbetts 10 dieselbe ist wie in der ersten Ausführungsform.

Die Belichtungsvektoren 11 werden dabei in Gruppen 31a...31h eingeteilt, wobei jede Gruppe genau zwei geometrisch benachbarte der Belichtungsvektoren 11 enthält. Da es sich bei dem beschriebenen Beispiel um 17 Belichtungsvektoren 11 handelt, bleibt ein letzter der Belichtungsvektoren 11 bei dieser Gruppierung alleine übrig. Dieser bildet dann eine RestGruppe 32, die nur aus ihm selbst besteht.

Bei der Belichtung der Belichtungsvektoren 11 wird nun in der zweiten Ausführungsform die Belichtung gruppenweise vorgenommen. Die Belichtung beginnt mit den beiden Belichtungsvektoren 11 der ersten Grupp 31a. Diese werden direkt hintereinander belichtet. Es findet also im Gegensatz zur ersten Ausführungsform kein Sprung zwischen jedem einzelnen der Belichtungsvektoren 11 statt, sondern die Belichtungsvektoren 11 einer Gruppe 31a...31h werden direkt hintereinander verwendet.

Nachdem alle Belichtungsvektoren 11 der ersten Gruppe 31a verwendet wurden, wird wiederum eine Sprungdistanz oder ein Sprungindex verwendet. Diese Werte entsprechen in ihrer Bedeutung derjenigen der ersten Ausführungsform. Es können aber auch andere Werte als die der ersten Ausführungsform gewählt werden. Für die zweite Ausführungsform sollen aber beispielhaft dieselben Werte angenommen werden. So werden nach der Verwendung einer Gruppe die geometrisch nächstfolgenden vier Belichtungsvektoren 11 übersprungen oder in anderen Worten ein räumlicher Abstand vom fünffachen eines Abstands zwischen zwei der Belichtungsvektoren 11 eingehalten. Dabei ist die Sprungdistanz hier so gewählt, dass nächstfolgend wieder eine komplette Gruppe in ihrer geometrischen Reihenfolge abgearbeitet wird. Dies ist hier die vierte Gruppe 31d. Auf diese folgt die siebte Gruppe 31g. Danach wird wieder zurückgekehrt zum Anfang der Belichtungsvektoren 11 und mit der zweiten Gruppe 31b fortgesetzt. Trifft die Gruppenwahl auf die RestGruppe 32, wird diese ebenso bearbeitet.

In dieser Weise werden die Gruppen 31a...31h, 32 abgearbeitet. Ebenso wie bei der ersten Ausführungsform wird durch die Reihenfolge der Abarbeitung, die nicht der geometrischen Reihenfolge der Belichtungsvektoren 11 entspricht, die Entwicklung von überhitzten Stellen unterbunden, da möglichst viel Zeit zwischen den Wärmeeinträgen an einer Stelle vergeht.

Es ist möglich, dass eine Simulation ergibt, dass die so erhöhte Zeit zwischen den Wärmeeinträgen nicht ausreichend ist. In diesem Fall kann eine Zeit bestimmt werden, die ausreichend ist, und durch eine zusätzlich in den Prozessablauf eingefügte Wartezeit sichergestellt werden, dass die nötige Zeit zwischen entsprechenden Gruppen von Belichtungsvektoren 11 vergeht. Durch die Abarbeitung der Belichtungsvektoren 11 abseits der geometrischen Reihenfolge ist aber die Wahrscheinlichkeit minimiert, dass eine zusätzliche Wartezeit nötig ist und, wenn doch eine Wartezeit nötig ist, dann ist diese zumindest soweit als möglich minimiert.

Die erste Ausführungsform entspricht der zweiten Ausführungsform, wobei als Größe der Gruppen in der ersten Ausführungsform der Wert eins anstatt der Gruppengröße zwei gewählt ist.

### Bezugszeichen

- 10: Pulverbett
- 11, 21, 23, 24, 25: Belichtungsvektoren
- 12: spitz zulaufender Bereich
- 13: Überhangs-Bereich
- 22: Sprungdistanz
- 31a...31h: Gruppen
- 32: Rest-Gruppe

## Patentansprüche

1. Verfahren zum schichtweisen Herstellen eines Objekts mit einem pulverbasierten 3D-Druckverfahren durch selektives Verfestigen von Schichten eines Pulvers in einem Pulverbett (10), wobei das Verfestigen innerhalb einer Schicht in aufeinanderfolgend verfestigten Bahnen (11, 21, 23, 24, 25) erfolgt, bei dem:
- die Bahnen (11, 21, 23, 24, 25) einer Schicht in einen oder mehrere Bereiche unterteilt werden, wobei die Bahnen (11, 21, 23, 24, 25) eines Bereichs parallel zueinander verlaufen,
- die Bahnen (11, 21, 23, 24, 25) eines Bereichs in Gruppen (31a...h, 32) unterteilt werden, wobei eine Gruppe (31a...h, 32) entweder eine Bahn (11, 21, 23, 24, 25) oder mehrere einander direkt benachbart liegende Bahnen (11, 21, 23, 24, 25) umfasst,
- ein ganzzahliger Sprungindex ermittelt wird, der mindestens eins beträgt,
- die Bahnen (11, 21, 23, 24, 25) einer ersten Gruppe (31a...h, 32) verfestigt werden,
- danach die Bahnen (11, 21, 23, 24, 25) einer zweiten Gruppe (31a...h, 32) verfestigt werden, wobei räumlich zwischen der ersten Gruppe (31a...h) und der zweiten Gruppe (31a...h) eine Anzahl weiterer Gruppen (31a...h, 32) liegt, die dem Sprungindex entspricht.

2. Verfahren nach Anspruch 1, bei dem der Sprungindex aus einer Sprungdistanz (22) ermittelt wird, wobei die Sprungdistanz (22) ein Vielfaches des Abstands zwischen benachbarten Bahnen (11, 21, 23, 24, 25) ist.

3. Verfahren nach Anspruch 2, bei dem die Sprungdistanz (22) durch eine Finite-Elemente-Simulation ermittelt wird.

4. Verfahren nach Anspruch 2 oder 3, bei dem die Sprungdistanz (22) ein ungerades Vielfaches des Abstands zwischen benachbarten Bahnen (11, 21, 23, 24, 25) ist.

5. Verfahren nach einem der vorangehenden Ansprüche, bei dem alle Gruppen (31a...h) bis auf höchstens eine Rest-Gruppe (32) jedes Bereichs dieselbe Anzahl Bahnen (11, 21, 23, 24, 25) aufweisen.

6. Verfahren nach einem der vorangehenden Ansprüche, bei dem alle Gruppen (31a...h, 32) bis auf höchstens eine Rest-Gruppe (32) jeweils genau 2 oder genau 3 Bahnen (11, 21, 23, 24, 25) umfassen.

7. Verfahren nach einem der vorangehenden Ansprüche, bei dem die Gruppen (31a...h) mehrere Bahnen (11, 21, 23, 24, 25) umfassen und bei dem bei wenigstens einer der Gruppen (31a...h) für die zuerst verfestigte Bahn (11, 21, 23, 24, 25) der Gruppe (31a...h) für das Verfestigen eine höhere Leistung für den verwendeten Energiestrahl, insbesondere eine höhere Laserleistung verwendet wird als für die weiteren Bahnen (11, 21, 23, 24, 25) der Gruppe (31a...h) .

8. Verfahren nach einem der vorangehenden Ansprüche, bei dem nach dem Verfestigen der Bahnen (11, 21, 23, 24, 25) der ersten Gruppe (31a...h) und vor dem Verfestigen der Bahnen (11, 21, 23, 24, 25) der zweiten Gruppe (31a...h) die erste Bahn (11, 21, 23, 24, 25) einer räumlich der ersten Gruppe (31a...h) nächstfolgenden Gruppe (31a...h) verfestigt wird.

9. Verfahren nach einem der vorangehenden Ansprüche, bei dem
- eine Abkühlzeit ermittelt wird, die die Zeitspanne angibt, die zwischen der Belichtung benachbart liegender Gruppen (31a...h, 32) vergehen muss, um eine lokale Überhitzung zu vermeiden,
- bei Belichtung einer Gruppe (31a...h, 32), die direkt benachbart ist zu einer bereits belichteten Gruppe (31a...h, 32), geprüft wird, ob der zeitliche Abstand der Belichtung beider Gruppen (31a...h, 32) geringer ist als die Abkühlzeit,
- in diesem Fall eine Wartezeit vor der Belichtung der Gruppe (31a...h, 32) eingefügt wird, sodass der zeitliche Abstand der Belichtung beider Gruppen (31a...h, 32) wenigstens so groß ist wie die Abkühlzeit.

10. Verfahren nach einem der vorangehenden Ansprüche, bei dem die Bahnen (11, 21, 23, 24, 25) aller Bereiche in Gruppen (31a...h, 32) unterteilt werden.

11. Vorrichtung zum schichtweisen Herstellen eines Objekts mit einem 3D-Druckverfahren durch selektives Verfestigen von Schichten eines Pulvers in einem Pulverbett, wobei das Verfestigen innerhalb einer Schicht in aufeinanderfolgend verfestigten Bahnen (11, 21, 23, 24, 25) erfolgt, umfassend eine Einrichtung zur Erzeugung eines Energiestrahls und eine Steuerungseinrichtung zur Steuerung der Einrichtung, wobei die Steuerungseinrichtung ausgestaltet ist, den Energiestrahl entlang von Bahnen (11, 21, 23, 24, 25) auf eine Pulverschicht zu richten und dabei
- die Bahnen (11, 21, 23, 24, 25) einer Schicht in einen oder mehrere Bereiche zu unterteilen, wobei die Bahnen (11, 21, 23, 24, 25) eines Bereichs parallel zueinander verlaufen,
- die Bahnen (11, 21, 23, 24, 25) eines Bereichs in Gruppen (31a...h, 32) zu unterteilen, wobei eine Gruppe (31a...h, 32) entweder eine Bahn (11, 21, 23, 24, 25) oder mehrere einander direkt benachbart liegende Bahnen (11, 21, 23, 24, 25) umfasst,
- einen ganzzahligen Sprungindex zu ermitteln, der mindestens eins beträgt,
- den Energiestrahl so zu steuern, dass die Bahnen (11, 21, 23, 24, 25) einer ersten Gruppe (31a...h, 32) verfestigt werden,
- danach den Energiestrahl so zu steuern, dass die Bahnen (11, 21, 23, 24, 25) einer zweiten Gruppe (31a...h, 32) verfestigt werden, wobei räumlich zwischen der ersten Gruppe (31a...h, 32) und der zweiten Gruppe (31a...h, 32) eine Anzahl weiterer Gruppen (31a...h, 32) liegt, die dem Sprungindex entspricht.
